# EUROPEAN PATENT APPLICATION

(11) **EP 1 785 655 A2**
(43) Date of publication of application: **16.05.2007**
(21) Application number: 06123688.1
(22) Date of filing: 08.11.2006
(51) Int. Cl.: F16K 31/40

(54) **Valve**

(30) Priority: 09.11.2005 IT TO20050159 U
(71) Applicant: Elbi International SPA, 10129 Torino (IT)
(72) Inventor: Bindocci, Sabrina, I-10099 San Mauro Torinese (TO) (IT); Aita, Luigi, I-10040 Val della Torre (TO) (IT); Boin, Mario, I-10144 Torino (IT); Daudo, Franco, 10146 Torino (IT)
(74) Representative: Quinterno, Giuseppe

(57) **Abstract**

The device (1) comprises a support structure (2) including a tubular casing (14) around which a control coil or solenoid (16) is arranged and in which a core (15) is mounted movably, the core (15) carrying, at one end, a closure member (17) suitable for cooperating with a valve seat (12) for the control of the passage of a flow of liquid between an inlet duct (3) and an outlet duct (4). The coil (16) is capable, when energized, of bringing about a movement of the core (15) against the action of a biasing spring (18), from a normal or rest position (Figure 3) to a working position (Figure 4) in which the closure member (17) closes and opens the valve seat (12), respectively.

The device (1) further comprises a manually-operable control device (20) including at least one permanent magnet element (23) which can be moved manually towards the end (14b) of the tubular casing (14) which faces away from the valve seat (12) so as to attract the core (15) to the working position, removing the closure member (17) from the associated valve seat (12) in order thus to allow liquid to pass from the inlet duct (3) to the outlet duct (4).

## Description

The present invention relates to a solenoid-valve device of the type defined in the introductory part of Claim 1.

Solenoid-valve devices of this type are used, for example, for controlling the supply of water in central-heating and/or domestic hot-water generating boilers.

In this application, a solenoid-valve device of this type enables the water in the heating-water circuit to be topped up automatically.

However, when such a user apparatus is installed for the first time, for example, in a building under construction, owing to the non-availability of an electrical supply voltage, the fitter may not be able to check the functionality of the apparatus and, in particular, may not be able to fill the heating circuit with water (typically from the water mains).

An object of the present invention is to provide a solenoid-valve device of the type defined above which overcomes the problem outlined above.

This and other objects are achieved according to the invention by a solenoid-valve device the principal characteristics of which are defined in appended Claim 1.

Further characteristics and advantages of the invention will become clear from the following detailed description which is given purely by way of non-limiting example with reference to the appended drawings, in which:

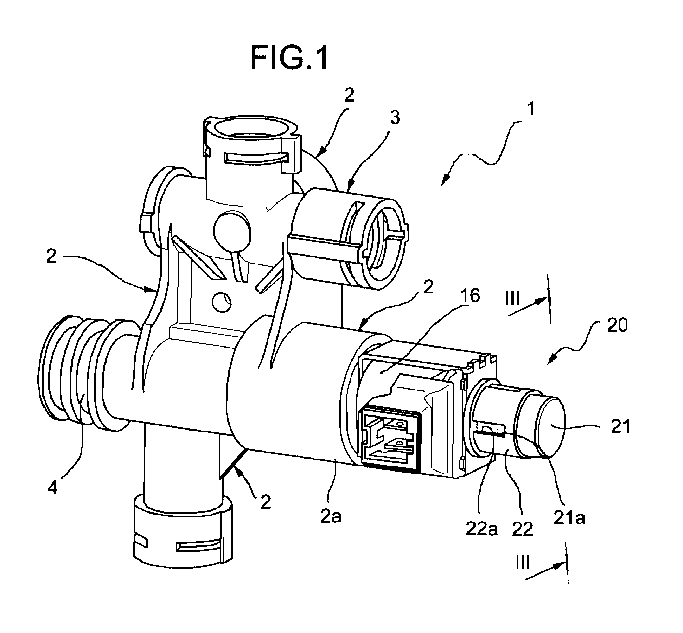

Figure 1 is a perspective view of a solenoid-valve device according to the present invention,
Figure 2 is a partially-exploded, perspective view of the solenoid-valve device of Figure 1,
Figure 3 is a partial view, sectioned on the line III-III of Figure 1, and shows a device according to the invention in the normal or rest condition, and
Figure 4 is a partial, sectioned view similar to that of Figure 3 and shows the device in the manually operated condition.

In the drawings, a solenoid-valve device according to the invention for the supply of a flow of liquid to a user apparatus, not shown, is generally indicated 1.

In the embodiment shown by way of example in the drawings, the solenoid-valve device 1 comprises a shaped support structure which is generally indicated 2 and is made, for example, of several parts moulded from plastics material.

In particular, an inlet connector 3 and an outlet connector 4 are formed in the structure 2 and their hydraulic communication is controlled by the valve means described below.

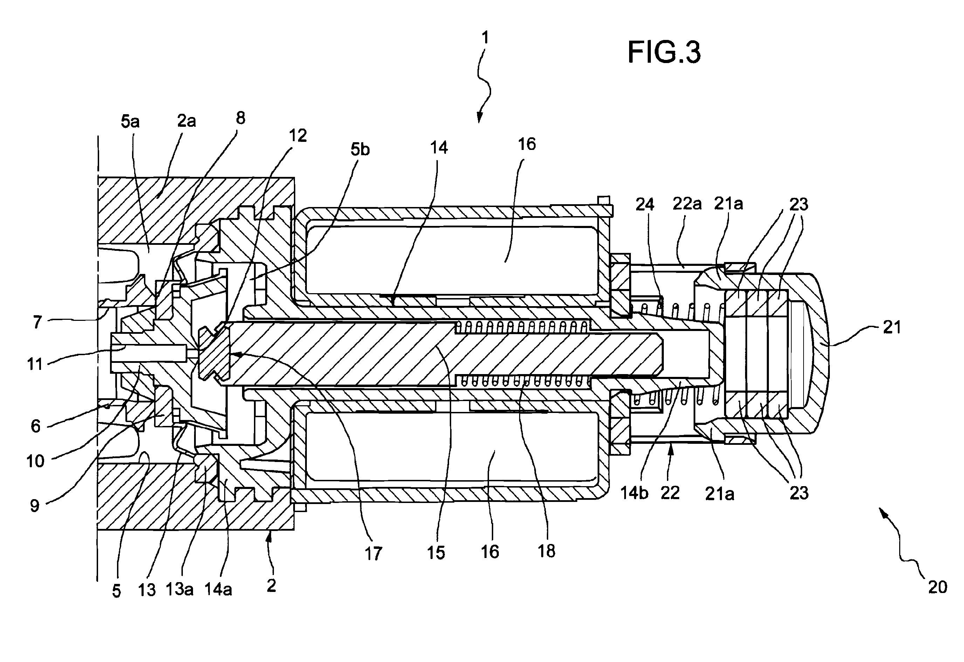

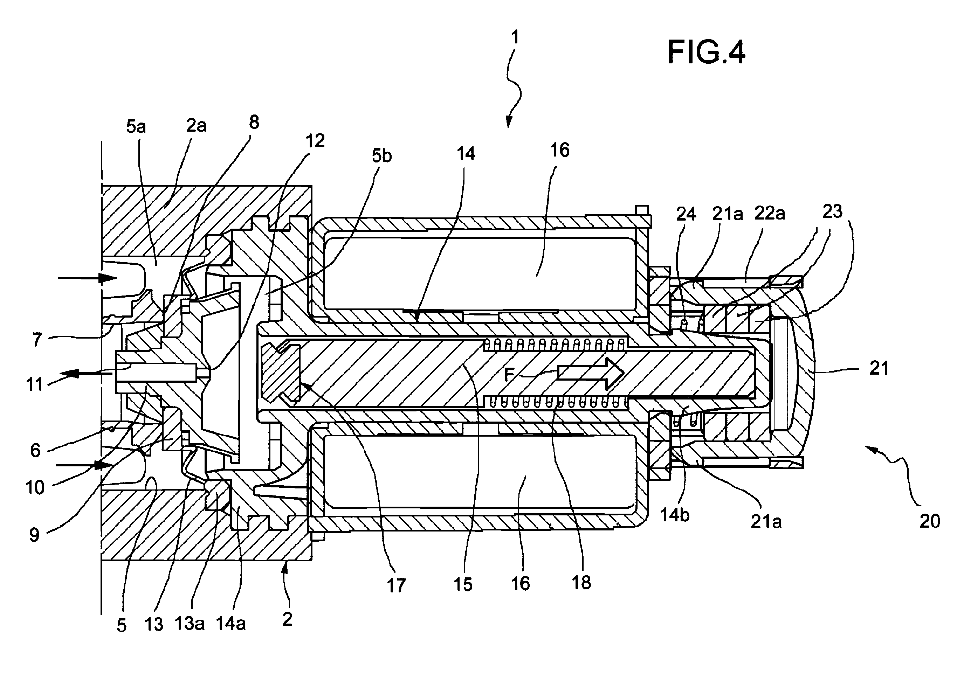

With reference to Figures 3 and 4, a chamber 5 is formed in a portion 2a of the structure 2; a tubular body 6 extends in the chamber 5 and the internal duct 7 of the tubular body 6 is in permanent communication with the outlet connector 4. The tubular body 6 forms a valve seat 8 normally closed by an annular closure member 9 carried by a body 10 mounted movably in the chamber 5. An axial duct 11 extends through the body 10 and terminates, at the end remote from the valve seat 8, in the region of a valve seat 12.

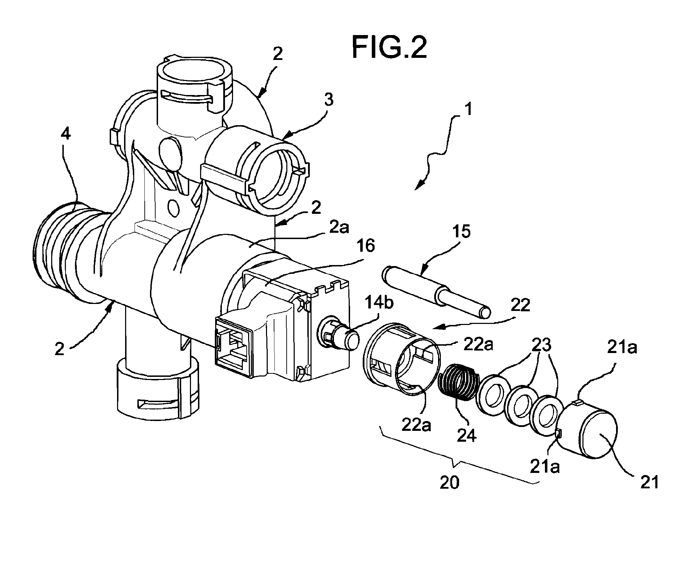

A resilient diaphragm 13 connected to the annular closure member 9 extends transversely in the chamber 5 and its peripheral portion 13a is gripped between an internal shoulder of the portion 2a of the structure 2 and an annular end portion 14a of a tubular body or casing generally indicated 14. This body or casing 14 is screwed into the portion 2a of the structure 2 and an elongate, substantially cylindrical core 15 of ferromagnetic material is mounted movably therein (see also Figure 2).

A control coil 16 is arranged around the tubular casing 14.

As can be seen in Figures 2 to 4, the tubular casing 14 has a tubular portion 14b which projects from the coil 16 at the end remote from the seat 12.

The movable core 15 carries a closure member 17 at the end facing the seat 12. A helical spring 18 disposed inside the casing 14 tends to urge the core 15 into the position shown in Figure 3 in which the associated closure member 17 closes the valve seat 12.

In operation, excitation of the control coil 16 can bring about an axial movement of the core 15 and of the closure member 17 in the direction of the arrow F of Figure 4, that is, away from the seat 12, against the action of the biasing spring 18.

An annular region 5a is defined inside the portion 2a of the structure 2 between the tubular body 6, the closure member 9, the diaphragm 13, and the wall of the portion 2a of the structure 2. This region 5a communicates permanently, in a manner not shown, with the outlet connector 4 of the solenoid-valve device. This region is normally disconnected, that is separated, from the inlet connector 3 because the closure member 9 bears against the seat 8 of the tubular body 7.

A further region, indicated 5b in Figures 3 and 4, is defined in the solenoid-valve device between the movable body 10, the diaphragm 13, and the body 14. This region 5b communicates permanently with the region 5a through one or more holes provided in the diaphragm 13 and/or optional by-pass ducts provided in the walls of the portion 2a of the structure 2 and of the portion 14a of the tubular body or casing 14.

The solenoid-valve as described so far is absolutely conventional. It comprises a main valve including the valve seat 8 and the associated closure member 9 and a so-called pilot valve comprising the valve seat 12 and the associated closure member 17.

In Figure 3, both the main valve 8, 9 and the pilot valve 12, 17 are closed.

In known manner, when the control coil 16 is energized, the core 15 is moved from the rest position shown in Figure 3 to the working position shown in Figure 4 and removes the closure member 17 from the valve seat 12. As a result, the region or chamber 5b is suddenly put into communication with the duct 7 inside the tubular element 6 through the axial duct 11 of the movable body 10. The hydraulic pressure prevailing in the region or chamber 5a can therefore now remove the closure member 9 from the associated valve seat 8, in fact causing the main valve to open. The region 5a is then put into communication with the duct 7 inside the tubular element 6, that is, the inlet connector 3 of the solenoid-valve device is put into hydraulic communication with the outlet connector 4. Water can thus flow between the connectors in order to be supplied to a user apparatus.

When the control coil 16 is de-energized, the biasing spring 18 returns the core 15 and the associated closure member to the position shown in Figure 3, shutting off the axial duct 11 formed in the movable body 10. A hydraulic pressure is consequently produced in the region 5b; this pressure acts against the pressure prevailing in the region 5a and causes the closure member 9 to return onto the valve seat 8, closing the main valve.

The above-described method of operation presupposes that an electrical supply is present for the excitation of the control coil 16.

To enable the solenoid-valve device also to be opened in the absence of an electrical supply, in the solenoid-valve device according to the invention, a manually-operable control device, generally indicated 20, is provided.

In the embodiment shown by way of example, the manual control device 20 comprises a push-button member 21 mounted so as to be slidable along a tubular guide structure 22 which is fixed to the carrying structure of the coil 16 around the end portion 14b of the tubular casing 14.

A plurality of rings 23 of permanent magnetic material having an inside diameter greater than the outside diameter of the end portion 14b of the tubular casing 14 are disposed in the push-button member 21.

In the embodiment illustrated, the push-button member 21 has a plurality of radially outwardly projecting teeth 21a engaged slidingly in longitudinal slots 22a of the tubular guide element 22.

A helical return spring 24 arranged around the end portion 14b of the tubular casing 14 acts on the magnets 23 and on the push-button member 21, tending to keep them in the inactive position shown in Figure 3 in which the magnets are relatively remote from the movable core 15.

In use, if, whilst the solenoid-valve device 1 is in the rest condition shown in Figure 3, the push-button 21 is pressed and moved to the position shown in Figure 4, its magnets 23 move towards the core 15 until they overcome the reaction of the biasing spring 18 and attract the core as shown in Figure 4. In this condition, the closure member 17 of the pilot valve opens the associated valve seat 12 and allows the valve 8, 9 to open almost immediately.

In the embodiment illustrated, the solenoid-valve device 1 remains in the open condition as long as the push-button member 21 continues to be pressed. When the push-button member is released, the return spring 24 returns the member and the associated magnets 23 to the position of Figure 3, that is, to a position in which the magnets can no longer keep the core 15 in the position of Figure 4. The core 15 thus returns to the position of Figure 3 under the thrust of the spring 18 and the associated closure member 17 closes the valve seat 12, thus bringing about almost immediate reclosure of the main valve 8, 9.

Suitable measures may be taken, for example, by means of known releasable engagement devices, to confer on the push-button member 21 a bistable type of operation, in the sense that it is held stably in the inactive or in the active position to which it is brought manually upon each switching.

Naturally, other manually-operable members or devices may be used instead of a push-button member to perform the above-described functions.

A filter for the liquid admitted may advantageously be associated with the inlet duct 3 of the solenoid-valve device. The filter is advantageously mounted so as to be removable from the exterior, in the inlet connector or duct 3 or in a seat formed so as to branch off that connector or duct.

A non-return valve device may advantageously be associated with the outlet duct 4 to prevent the liquid from flowing back towards the inlet connector or duct 3.

Although the foregoing description and the appended drawings refer to an indirect solenoid valve, that is, a solenoid-valve comprising a main valve with which a pilot valve is associated, naturally, the invention is also applicable to direct solenoid-valve devices, that is, those that do not have a pilot valve, that is, which comprise a single electromagnetically-operated valve.

In an alternative embodiment, not illustrated, the permanent-magnet manually-operable device 20 is produced in a portable form, separate and distinct from the solenoid-valve device 1 and can be fitted manually on that device at the end 14b of the casing 14 in order to bring about the attraction of the movable core 15 to the position of Figure 4.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A solenoid-valve device (1) comprising a support structure (2) including a tubular casing (14) around which a control coil or solenoid (16) is arranged and in which a core (15) is mounted movably, the core (15) carrying, at one end, a closure member (17) suitable for cooperating with a valve seat (12) for the control of the passage of a flow of liquid between an inlet duct (3) and an outlet duct (4), the coil (16) being capable, when energized, of bringing about a movement of the core (15), against the action of biasing means (18), from a normal or rest position (Figure 3) to a working position (Figure 4) in which the closure member (17) closes and opens the valve seat (12), respectively,
the solenoid-valve device (1) being **characterized in that** it further comprises a manually-operable control device (20) including at least one permanent magnet element (23) which is suitable to be moved manually towards the end (14b) of the tubular casing (14) which faces away from the valve seat (12) so as to attract the core (15) to the working position, removing the closure member (17) from the associated valve seat (12) in order thus to allow liquid to pass from the inlet duct (3) to the outlet duct (4).

2. A solenoid-valve device according to Claim 1 in which the at least one permanent magnet element (23) is carried by a manually-operable member (21) such as a push-button which is mounted so as to be slidable along a guide structure (22) fixed around an end portion (14b) of the tubular casing (14) which projects from the coil (16), the member (21) being movable manually from an inactive position to an active position in which the at least one permanent magnet element (23) is remote from and close to the core (15), respectively, against the action of associated resilient return means (24) which tend to bring about the movement of the member (21) to the inactive position.

3. A solenoid-valve device according to Claim 1 or Claim 2 in which the manually-operable device (20) comprises releasable engagement means suitable for conferring a bistable type of operation thereon.

4. A solenoid-valve device according to any one of the preceding claims in which a filter for the liquid is associated with the inlet duct (3), and is preferably mounted so as to be removable.

5. A solenoid-valve device according to Claim 4 in which the filter is disposed in a seat in a branch of the inlet duct or connector (3).

6. A solenoid-valve device according to any one of the preceding claims in which non-return valve means are associated with the outlet duct or connector (4) to prevent liquid from flowing back towards the inlet duct (3).

7. A solenoid-valve device according to Claim 1 in which the control device (20) is produced in a portable form which is separate and distinct from the solenoid-valve device (1) and which can be fitted on an end (14b) of the casing (14) in order to bring about an attraction of the movable core (15) to the position in which the associated closure member (17) opens the corresponding valve seat (12).
